# EUROPEAN PATENT SPECIFICATION

(11) **EP 4 057 768 B1**
(45) Date of publication and mention of the grant of the patent: **06.11.2024**
(21) Application number: 20897744.7
(22) Date of filing: 21.09.2020
(51) Int. Cl.: H04L 41/0806, H04L 47/22, H04L 47/24, H04L 43/0894, H04L 41/5054, H04L 41/00, H04W 84/12, H04L 41/5019, H04L 41/14, H04L 41/16, H04L 43/0823, H04L 43/0852, H04L 43/16

(54) **TRANSMISSION RATE CONFIGURATION METHOD AND APPARATUS**
VERFAHREN UND VORRICHTUNG ZUR ÜBERTRAGUNGSRATENKONFIGURATION
PROCÉDÉ ET APPAREIL DE CONFIGURATION DE DÉBIT DE TRANSMISSION

(30) Priority: 11.12.2019 CN 201911267103
(43) Date of publication of application: 14.09.2022
(73) Proprietor: Huawei Technologies Co., Ltd., Shenzhen, Guangdong 518129 (CN)
(72) Inventor: WANG, Yiming, Shenzhen, Guangdong 518129 (CN); ZHOU, Yun, Shenzhen, Guangdong 518129 (CN); GAI, Gang, Shenzhen, Guangdong 518129 (CN)
(74) Representative: MERH-IP Matias Erny Reichl Hoffmann Patentanwälte PartG mbB
(86) International application number: PCT/CN2020/116630
(87) International publication number: WO 2021/114807

(56) References cited:
- WO-A1-2016/209266
- WO-A2-2009/091739
- CN-A- 102 802 214
- CN-A- 104 283 699
- CN-A- 106 850 125
- CN-A- 107 426 721
- CN-A- 108 834 223
- US-A1- 2008 049 615
- US-A1- 2017 251 392
- US-B2- 8 792 382

## Description

### TECHNICAL FIELD

This application relates to the field of communication technologies, and in particular, to a transmission rate configuration method and an apparatus.

### BACKGROUND

In current wireless fidelity (WIFI) network communication, a WIFI signal may be provided by an access point (AP, for example, an access hotspot), for accessing the Internet by a terminal device (or may be referred to as a station (STA)) that has a WIFI communication function, such as a mobile phone or a tablet computer.

Currently, when determining a transmission rate of a data stream, a gateway device is not concerned about a service type of a service to which the data stream belongs, for example, chooses to configure transmission rates for data streams of different services in a throughput maximizing manner. The transmission rate is used to guarantee that the data stream can obtain a data transmission guarantee during transmission, for example, obtain guarantees in terms of a latency, bandwidth, and a packet loss rate (PLR).

However, with continuous extension of a service type, a throughput is no longer an only concerned indicator in a service data transmission process. Therefore, if a transmission rate is configured based on a throughput or another single principle, data transmission guarantee requirements of different services cannot be met. Therefore, an existing transmission rate configuration manner of the gateway device needs to be improved.

WO 2016/209266 A1 discloses a transceiver which communicates multicast frames to a plurality of client devices in a multicast group. A controller determines that a predetermined time has passed since the transceiver most recently sent a unicast transmission to one of the plurality of client devices. The controller computes a data rate for the one of the plurality of client devices based on the transmission of the unicast frame to the one of the plurality of client devices.

US 2008/049615 A1 discloses a system for shaping data packet traffic on a packet network including at least one data packet rate shaper in communication with at least one Internet gateway for shaping the rates of transmission of the data packets through the packet network based on network performance data transmitted by the at least one customer access node to the Internet gateway.

CN 106 850 125 B discloses MAC layer data packet retransmission mechanism optimization towards Cellular Networks and WLAN combination networks according to the network state information of Cellular Networks and WLAN.

US 2017/251392 A1 discloses an access point that determines transmission rates of the data frames. As the transmission rate, for example, MCS (Modulation and Coding Scheme) can be used.

### SUMMARY

This application provides a transmission rate configuration method and an apparatus, to improve flexibility of downlink transmission rate configuration of an access point, so that a downlink data transmission process meets requirements of different services. The technical improvement is achieved by the solution provided in accordance with the claims.

The following aspects are useful for understanding the present disclosure.

According to a first aspect, the invention provides a transmission rate configuration method performed by an access point as defined in claim 1.

According to a second aspect, the invention provides a communications apparatus as defined in claim 6. Preferred embodiments are defined in the dependent claims.

For beneficial effects of the second aspect and the possible designs of the second aspect, refer to descriptions of the beneficial effects of the method according to any one of the first aspect and the possible designs of the first aspect.

### BRIEF DESCRIPTION OF DRAWINGS

FIG. 1 is a schematic architectural diagram of a wireless communications system according to an embodiment of this application;
FIG. 2 is a schematic architectural diagram of another wireless communications system according to an embodiment of this application;
FIG. 3 is a schematic diagram of a structure of an access point according to an embodiment of this application;
FIG. 4 is a schematic flowchart of a communication method according to an embodiment of this application;
FIG. 5 is a schematic diagram of a traffic shaping effect according to an embodiment of this application;
FIG. 6 is a schematic diagram of a channel selection effect according to an embodiment of this application;
FIG. 7 is a schematic diagram of a structure of a channel apparatus according to an embodiment of this application;
FIG. 8 is a schematic diagram of a structure of another channel apparatus according to an embodiment of this application; and
FIG. 9 is a schematic diagram of a structure of another channel apparatus according to an embodiment of this application.

### DESCRIPTION OF EMBODIMENTS

To resolve a problem, in the conventional technology, that a transmission rate configuration process of an access point in a downlink data sending process is not flexible enough, this application proposes a transmission rate configuration method, to improve flexibility of downlink data transmission rate configuration, so that a downlink data transmission process meets transmission rate requirements of different services.

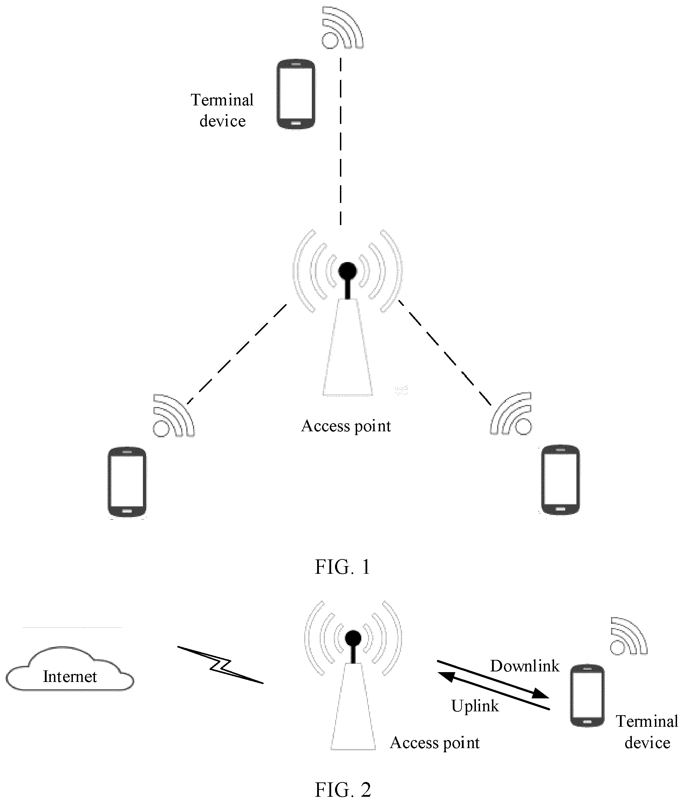

As shown in FIG. 1, the transmission rate configuration method provided in the embodiments of this application may be used in a communications system including an access point and at least one terminal device. The access point may be configured to provide a WIFI signal. By using the access point, the terminal device in the communications system shown in FIG. 1 may communicate with a communications device outside the communications system shown in FIG. 1. For example, the terminal device may access the Internet by using the access point. In addition, a plurality of terminal devices shown in FIG. 1 may communicate with each other by using the access point.

For example, the access point in this application may be a device that can provide a WIFI signal, such as an AP, customer premises equipment (customer premises equipment, CPE), or a gateway. The access point may be alternatively a device that can provide a WIFI hotspot, for example, a mobile terminal that can access a mobile network and provide a WIFI hotspot. For example, the access point may be implemented by a chip or a chip system.

The terminal device may include a mobile phone, a tablet computer, a wearable device (such as a smartwatch) having a wireless communication function, a vehicle-mounted device, or the like. An example embodiment of the terminal device includes but is not limited to an electronic device in which iOS^{®}, Android^{®}, Microsoft^{®}, or another operating system is installed. The electronic device may alternatively be, for example, a laptop (laptop) having a touch-sensitive surface (for example, a touch panel). It should be further understood that, in some other embodiments of this application, the terminal device may be alternatively a device, such as a desktop computer, that has a WIFI network access capability. For example, the terminal device may be a wireless terminal. For example, the terminal device may be implemented by a chip or a chip system.

It should be understood that the access point may be configured to provide a WIFI network (or referred to as a WIFI hotspot), and the terminal device may be configured to search for and access the WIFI network. It should be understood that in this application, there is no limitation that the terminal device can fall within a coverage area of a WIFI network provided by only one access point; and/or in this application, there is no limitation that a coverage area of a WIFI network provided by the access point includes only one terminal device.

As shown in FIG. 2, a signal sent by an access point to a terminal device may be referred to as a downlink signal in this application, and a downlink signal sending process may be referred to as downlink sending. The downlink signal may be used to carry signaling and/or data that are/is sent to the terminal device. The signaling may be referred to as downlink signaling, and the data may be referred to as downlink data. In addition, a signal sent by the terminal device to the access point may be referred to as an uplink signal in this application. The uplink signal may be used to carry signaling and/or data that are/is sent by the terminal device. The signaling may be referred to as uplink signaling, and the data may be referred to as uplink data.

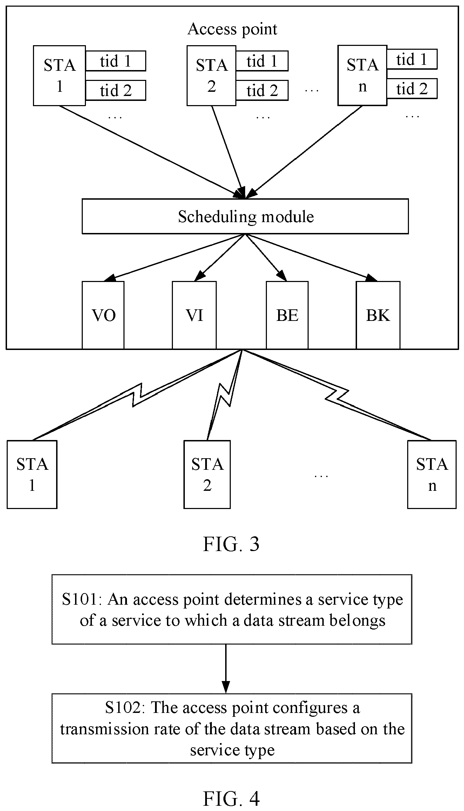

As shown in FIG. 3, when sending downlink data streams to a plurality of terminal devices (respectively marked as an STA 1, an STA 2, ..., and STA n), an access point provided in this embodiment of this application may allocate the data streams to different STA queues based on differentiated services code points (differentiated services code point, DSCP) of services to which the data streams belong. Each STA queue corresponds to a value of one DSCP. For example, different data streams may be represented by using traffic identifiers (traffic identifier, tid), for example, a tid 1, a tid 2, ... in FIG. 3.

In addition, the access point may place, by using a scheduling module (or scheduler), downlink data in a tid queue into a Wi-Fi multimedia (WIFI multi-media, WMM) queue corresponding to the tid queue, for waiting for sending. For access category (access category, AC) data streams, WMM queues are classified into four priority queues in ascending order of priorities: an AC-voice (AC-VO) stream, an AC-video (AC-VI) stream, an AC-best effort (AC-BE) stream, and an AC-background (AC-BK) stream, and it is guaranteed that a packet in a higher-priority queue has a higher channel preemption capability. The access point may further configure a transmission rate related to a downlink data sending process, for sending downlink data. The transmission rate is a parameter such as a modulation and coding scheme (modulation and coding scheme, MCS) rate configuration, a guard interval (guard interval, GI), bandwidth (bandwidth, BW), the number of spatial streams (number of spatial streams, NSS), an aggregation degree of an aggregate media access control (media access control, MAC) service data unit (MAC service data unit, MSDU) (A-MSDU), an aggregation degree of an aggregate MAC protocol data unit (MAC protocol data unit, MPDU) (A-MPDU), or a number of times configuration in a scheduling or retransmission policy that is based on a service set identifier (service set identifier, SSID) and a terminal device. It should be understood that in this application, downlink transmission rate may be configured in of the access point.

As shown in FIG. 4, a transmission rate configuration method provided in an embodiment of this application may include the following steps:
S101: An access point determines a service type of a service to which a data stream belongs.
   The data stream may be a downlink data stream that is sent to the access point and that needs to be sent by the access point to a terminal device. The service type may be used to represent a type of the service to which the data stream belongs. For example, the service type may include a video service, an online game service, a download service, a virtual reality (virtual reality, VR) service, and/or a low-latency service.
S102: The access point configures a transmission rate of the data stream based on the service type of the service to which the data stream belongs. Accordingly, the access point can send the data stream to the terminal device based on the configured transmission rate.

In the foregoing method, the access point may configure, based on a service characteristic of the data stream, the transmission rate used when the data stream is sent. Therefore, the configured transmission rate meets a requirement of the service to which the data stream belongs, thereby improving flexibility of a transmission rate configuration process.

It should be understood that, the access point may configure the transmission rate of the data stream based on the service type of the service to which the data stream belongs, so that a data stream transmission process meets a transmission latency requirement, a throughput requirement, a packet loss rate requirement, and/or the like of the service to which the data stream belongs.

For example, the access point may identify, based on a packet of the data stream, the service type of the service to which the data stream belongs. For example, the access point may obtain a service identifier carried in the packet of the data stream, to determine the service to which the data stream belongs, to further determine the service type of the service. For another example, the packet of the data stream may carry a source IP address of the data stream, the source IP address is, for example, an address of a server that provides the service, and the access point may query the service type of the service based on the source IP address. In addition, the packet of the data stream may alternatively carry indication information of the service type, such as a service type identifier.

In addition, the access point may alternatively identify, based on a traffic model of the data stream, the service type of the service to which the data stream belongs. For example, specific distribution rules exist in terms of a peak value, a traffic average value, and a traffic fluctuation status of a data stream of a specific service type. The access point may compare a data stream from a network with distribution rules of a stored traffic model to determine whether the data stream is a data stream that has specific distribution rules; and when recognizing that these rules exist in the data stream, the access point can recognize that a service to which the data stream belongs is a service of the specific type.

In addition, it should be understood that in this application, the access point may alternatively determine, in another manner in the conventional technology, the service type of the service to which the data stream belongs.

For example, the transmission latency requirement, the throughput requirement, the packet loss rate requirement, and/or the like of the service type may be represented as a correspondence between the service type and the transmission latency requirement, the throughput requirement, the packet loss rate requirement, and/or the like. The service type and the service requirement may be preconfigured in the access point, or may be obtained by the access point from the terminal device or a network side.

As shown in Table 1, the access point may store a correspondence between the service type and the service requirement of the service. After recognizing the service type of the data stream, the access point may determine, based on the correspondence, the service requirement of the service to which the data stream belongs.

**Table 1**

| Service type | Service requirement |
|---|---|
| Firs-type service | Low latency (not higher than a first latency threshold) |
| Download service | Low packet loss rate |
| N^{th}-type service | High throughput |
| ... | ... |

It should be understood that, Table 1 shows only some possible correspondences between service types and service requirements by using examples. It should not be understood that the correspondence between the service type and the service requirement of the service is limited to only those shown in Table 1, and it also should not be understood that a service type and a service requirement to which this application is applicable are limited to those shown in Table 1. For example, based on a requirement of an actual service, the correspondence between the service type and the service requirement may be alternatively expressed as a correspondence between a service of a specific type and a transmission latency and a throughput, a correspondence between a service of a specific type and a throughput and a packet loss rate, a correspondence between a service of a specific type and a transmission latency and a packet loss rate, or a correspondence between a service of a specific type and a transmission latency, a throughput, and a packet loss rate.

In addition, in this application, different types of services may have a same service requirement for a transmission latency, a throughput, or a packet loss rate. In this application, different requirements may be proposed for specific values of transmission latencies (or throughputs or packet loss rates) of a plurality of types of services that have transmission latency (or throughput or packet loss rate) requirements. For example, both a K^{th}-type service and an L^{th}-type service require low latencies, but a transmission latency required by the K^{th}-type service is not higher than 30 milliseconds (ms), and the L^{th}-type service requires that a transmission latency should not be higher than 50 ms.

It should be understood that the "first-type service", the "N^{th}-type service", or the like in Table 1 may be replaced with a specific service type, such as an online game service, a download service, a video service, or a VR service.

For example, if the access point determines that the service to which the data stream belongs is the first-type service shown in Table 1, where it may be learned from Table 1 that, the first-type service has a relatively high transmission latency requirement (for example, a transmission latency required by the service type is not higher than 30 milliseconds (ms)), the access point may send the data stream by using a relatively low sending rate, so that a packet loss rate is reduced by reducing a sending rate, to reduce a transmission latency. In this example, the access point may determine a first transmission rate based on the service type of the data stream. The transmission rate corresponding to the first transmission rate is not greater than a first rate threshold. Subsequently, the data stream may be sent by using the transmission rate. For example, the first transmission rate is not greater than an average value of transmission rates at which the access point transmits data streams. Specifically, when configuring the first rate threshold, the access point may configure a relatively small MCS rate (for example, an MCS rate less than or equal to an MCS rate average value).

For example, the first-type service may include a real-time online service such as multiplayer online battle arena (multiplayer online battle arena, MOBA), or Player Unknown's Battlegrounds, or red packet grabbing, or another service that has a relatively high transmission latency requirement. Rates of data streams of these services are relatively small and usually do not exceed 2 megabits per second (Mbps). However, these services usually have relatively high data transmission latency requirements. When a data transmission latency is excessively high, service experience is severely affected. Therefore, for this type of service, a packet loss rate in a data transmission process may be reduced by reducing a sending rate, to reduce a transmission latency.

In another example, if the access point determines that the service to which the data stream belongs is a download service, for example, a hypertext transfer protocol (hypertext transfer protocol, HTTP) download service, a download service of another protocol type, or another service that requires a relatively high throughput, the access point may reduce a packet loss rate in downlink transmission by using a relatively high transmission rate, so that packet retransmissions are reduced by reducing packet losses, to obtain stable high-rate download experience. In this example, the access point may determine a second transmission rate. The transmission rate corresponding to the second transmission rate is not less than a second rate threshold. For example, the second transmission rate is not less than the average value of transmission rates at which the access point transmits data streams. Specifically, the second transmission rate may include a relatively large MCS rate. Specifically, when configuring the second transmission rate, the access point may configure a relatively large MCS rate (for example, an MCS rate greater than or equal to the MCS rate average value).

In addition, the access point may alternatively store a correspondence between the service type and the transmission rate, so that after determining the service type of the service to which the data stream belongs, the access point can determine the transmission rate of the data stream based on the correspondence, without determining, based on the service type, the service requirement of the service to which the data stream belongs.

In the claimed invention, in implementation of S102, the access point configures the transmission rate of the data stream based on the service type of the service to which the data stream belongs and information about traffic of the data stream (that is, a rate of the data stream). The traffic information of the data stream may be used to describe a traffic model of the data stream, to reflect a characteristic of the data stream. For example, the traffic information may reflect average traffic of the data stream, a traffic peak value, or whether burst traffic exists.

After receiving the data stream, the access point determines the traffic information of the data stream. When the access point determines that a relatively large traffic burst exists in the data stream, and the service to which the data stream belongs is a second-type service, the access point configures the transmission rate of the data stream based on the average traffic of the data stream. The traffic burst means that one or more traffic peak values of the data stream each are not lower than n times of the average traffic of the data stream, and n is greater than 1, for example, n=1.5, 2, 3, ....

The access point configures the transmission rate of the data stream to be not lower than x times of the average traffic of the data stream, where x is greater than 1. Therefore, the access point can provide a smooth air interface transmission rate for the service, thereby avoiding a packet loss caused by a transmission rate selection change due to air interface fluctuation, improving an anti-interference capability in downlink data transmission, and guaranteeing good experience of the service. Specifically, x is greater than n.

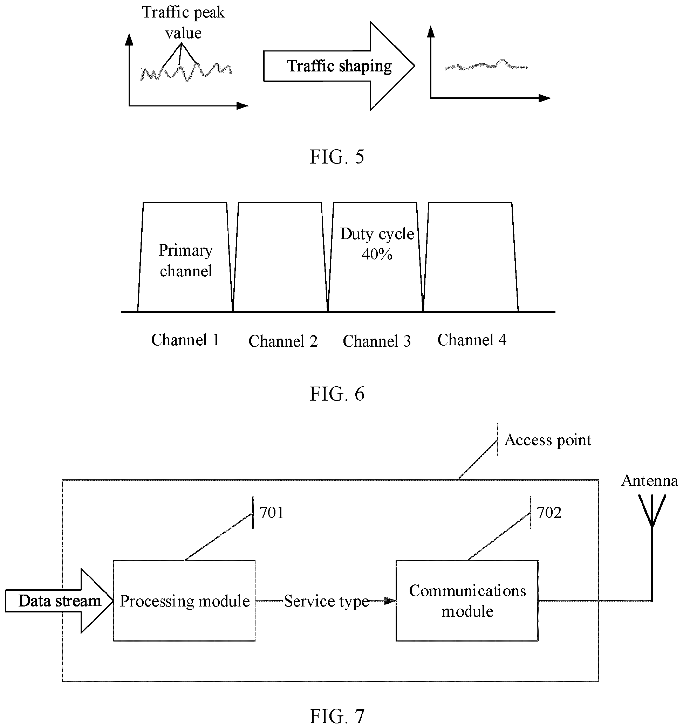

In addition, in this example, because the traffic burst exists in the data stream, and traffic fluctuation is relatively large, the access point may perform traffic shaping on the data stream, so that traffic fluctuation of the data stream is smoother, to reduce a traffic burst occurrence probability. Therefore, an anti-interference capability in downlink data transmission is further improved. As shown in FIG. 5, in this application, a data stream existing before traffic shaping includes a plurality of traffic peak values, and each traffic peak value is traffic at a peak of the data stream. Therefore, traffic fluctuation is relatively large. After the traffic shaping, the traffic fluctuation of the data stream is alleviated.

For example, for a service that has relatively large traffic and usually has a traffic burst in a data stream, such as a 4K high-definition video service, an interactive personality TV (IPTV) service, and/or a VR service, after receiving a data stream of this type of service, the access point may determine a third transmission rate based on average traffic of the data stream. The third transmission rate may be x times of the average traffic of the data stream, and x is greater than 1. Then, the access point may send, to the terminal device based on the third transmission rate, a data stream obtained after the traffic shaping. For a traffic shaping method, refer to a manner in the conventional technology. This is not specifically limited in this application.

In addition, the access point may alternatively store a correspondence between the service type, the traffic information of the data stream, and the transmission rate, so that after determining the service type of the service to which the data stream belongs and the traffic information, the access point may determine the transmission rate of the data stream based on the correspondence.

For example, in this application, the access point may further obtain a communication status parameter of the access point and a receive end, and configure, with reference to the service type of the service to which the data stream belongs and/or the traffic information of the data stream, the transmission rate used when the data stream is sent to the receive end. The receive end may include the terminal device that receives the data stream, for example, the terminal device shown in FIG. 2. In this method, a most appropriate communication parameter may be selected based on the service type and the traffic information of the downlink data stream and a communication status of the access point and the receive end, to implement flexible configuration. For example, the access point may obtain the communication status parameter in real time, and determine, based on the communication status parameter obtained in real time, a real-time configuration used to send the data stream to the receive end, to implement dynamic transmission rate configuration.

The communication status parameter may include a part or all of communication parameters such as an interference duty cycle, an air interface bit error rate, an air interface retransmission rate, a service concurrency parameter (used to indicate how many downlink service data streams are concurrent), or an air interface rate of the receive end.

The access point may determine, based on the service type of the data stream and the communication status parameter, a parameter such as an MCS rate configuration, an aggregation degree of an A-MSDU, an aggregation degree of an A-MPDU, resource application and allocation rules of the terminal device, a queue allocation rule of WMM, or a number of times configuration in a scheduling or retransmission policy that is based on an SSID and the terminal. The access point may determine an optimal transmission rate for data streams of a same type, to send the data streams.

In a possible example, the access point may configure the transmission rate of the data stream based on a correspondence between the service type, the communication status parameter and/or the transmission rate. Specifically, after recognizing the service type of the data stream and/or obtaining the communication status parameter, the access point may determine, based on the correspondence, the service requirement of the service to which the data stream belongs. The correspondence between the service type, the communication status parameter, and/or the transmission rate may be shown in Table 2.

**Table 2**

| Service type | Communication status parameter | Transmission rate |
|---|---|---|
| Firs-type service | An interference duty cycle is lower than an interference duty cycle threshold | Transmission rate #1 |
| | An interference duty cycle is not lower than the interference duty cycle threshold | Transmission rate #2 |
| HTTP download service | An air interface retransmission rate is lower than an air interface retransmission rate threshold | Transmission rate #3 |
| | An air interface retransmission rate is not lower than the air interface retransmission rate threshold | Transmission rate #4 |
| N^{th}-type service | An air interface rate of a receive end is not lower than an air interface rate threshold | Transmission rate #4 |
| | An air interface rate of a receive end is lower than the air interface rate threshold | Transmission rate #5 |
| ... | ... | |

In a specific example, when the access point recognizes that an interference duty cycle of an interference channel is greater than the interference duty cycle threshold, indicating that signal interference of the interference channel is relatively strong, the access point may allocate an idle channel to a data stream on the interference channel, to switch the data stream from the interference channel to the idle channel for sending, thereby improving an anti-interference capability in downlink data transmission. As shown in FIG. 6, when the access point recognizes that an interference duty cycle of a channel 3 reaches the interference duty cycle threshold, such as 40%, the access point may switch a to-be-transmitted data stream on the channel 3 to an idle channel (such as a channel 4) for transmission. For example, as shown in Table 2, when the transmission rate #1 is used, the access point transmits the data stream by using the interference channel. If the access point determines that the interference duty cycle of the interference channel is not lower than the interference duty cycle threshold, indicating that interference of the interference channel is relatively severe, the access point switches to an idle channel corresponding to the transmission rate #2, to transmit the data stream.

In another specific example, when the access point recognizes that a plurality of concurrent to-be-sent data streams exist, the access point may determine respective transmission priority parameters of the plurality of data streams based on respective transmission latency requirements of services to which the plurality of data streams belong. For example, to-be-transmitted data streams of the access point include a data stream A of a real-time online game service and another data stream B. To reduce a transmission latency of the data stream A, the access point may improve a forwarding priority of the data stream A. For example, the access point may configure a queue allocation rule of WMM to place the data stream A into a higher-priority WMM queue.

In another example, after obtaining the service type of the data stream and/or the communication status parameter, the access point may determine a transmission rate parameter, such as the MCS rate configuration, the aggregation degree of the A-MSDU, the aggregation degree of the A-MPDU, the resource application and allocation rules of the terminal device, the queue allocation rule of the WMM, or the number of times configuration in the scheduling or retransmission policy that is based on the SSID and the terminal, based on the service type of the data stream and the communication status parameter by using an artificial intelligence (artificial intelligence, Al) algorithm such as a neural network model.

In addition, based on a service transmission requirement, the access point may further determine the transmission rate parameter based on the service type of the data stream, the traffic information of the data stream, and/or the communication status parameter. For example, when the traffic information of the data stream meets a specific condition, the transmission rate parameter of the data stream is determined based on the correspondence shown in Table 2. The specific condition met by the traffic information of the data stream is, for example, that the average traffic of the data stream is not lower than a traffic threshold, or that a traffic burst exists (or does not exist) in the data stream.

When the access point provided in this application is implemented, a possible structure of the access point may be shown in FIG. 7. It may be learned from FIG. 7 that, the access point includes a processing module 701 and a communications module 702. The processing module 701 may include a processor, for example, may be implemented by using an architecture of a CPU and/or an NPU. The processing module 701 may be configured to implement functions, such as data stream feature extraction, of the access point. The communications module 702 may be implemented by a scheduling module, a modem (modem), or the like. The communications module 702 may be configured to perform communication configuration and send/receive a radio frequency signal by using an antenna. In this application, the processor may also be referred to as a system on chip (system on chip, SOC). The communications module 702 may be referred to as a WIFI module. For example, the processing module may be implemented by a processing circuit such as a processing chip or a programmable logic controller (programmable logic controller, PLC). The communications module may be implemented by an interface circuit such as a PLC, or another medium.

Specifically, in this application, the processing module 701 determines a service type of a data stream, and the processing module 701 indicates the service type of the data stream to the communications module 702, so that the communications module 702 configures a transmission rate of the data stream based on the service type of the data stream, and sends the data stream, to meet a data transmission requirement of a service to which the data stream belongs.

In a possible example, when the service type is used to indicate that the service to which the data stream belongs is a first-type service, the communications module 702 may configure the transmission rate of the data stream as a first transmission rate. The first transmission rate is not greater than a first rate threshold. A transmission latency required by the first-type service is not higher than a latency threshold.

In another possible example, when the service type is used to indicate that the service to which the data stream belongs is an HTTP download service, the communications module 702 may configure the transmission rate of the data stream as a second transmission rate. The second transmission rate is not less than a second rate threshold.

In addition, the processing module 701 obtains traffic information of the data stream, and the processing module 701 sends the traffic information of the data stream to the communications module 702, so that the communications module 702 configures the transmission rate of the data stream based on the service type and the traffic information of the data stream.

Specifically, in the claimed invention, when the service type is used to indicate that the service to which the data stream belongs is a second-type service, and the traffic information is used to indicate that a traffic peak value of the data stream is not lower than n times of average traffic of the data stream, the communications module 702 configures the transmission rate of the data stream to be not less than x times of the average traffic of the data stream, where x is greater than 1. A packet loss rate required by the second-type service is not higher than a packet loss rate threshold, and n is greater than 1. For example, x is greater than n.

In this example, the processing module 701 may further perform traffic shaping on the data stream.

In addition, the communications module 702 may obtain a communication status parameter of the access point and a receive end of the data stream, so that the processing module 701 or the communications module 702 configures the transmission rate of the data stream based on the service type of the service to which the data stream belongs, the traffic information of the data stream, and the communication status parameter.

It should be understood that, in this application, the communications module 702 may alternatively determine a transmission rate parameter of the data stream according to the method provided in this application, and the communications module 702 sends the data stream based on the parameter.

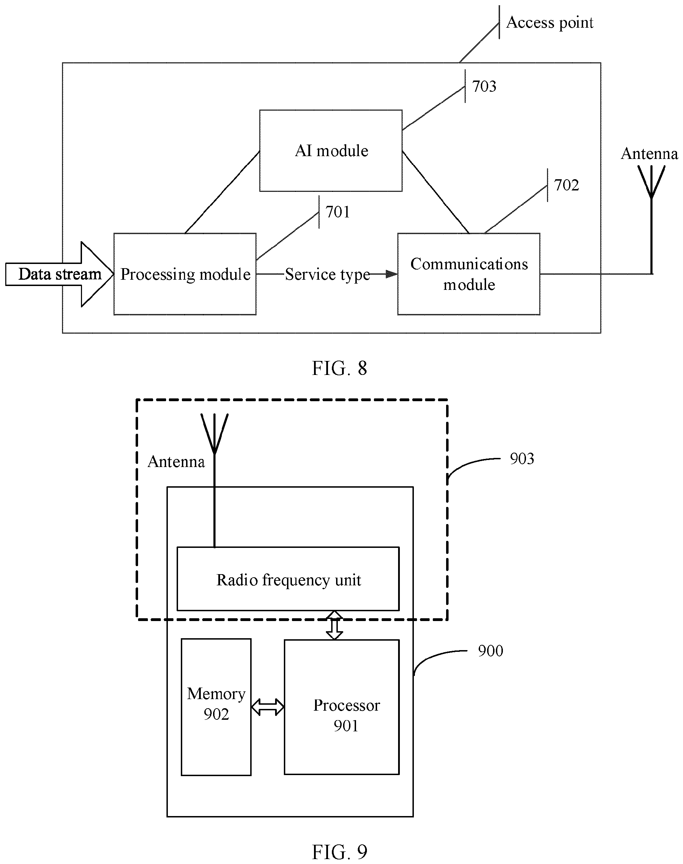

For example, as shown in FIG. 8, the communications apparatus may further include an AI module 703, configured to: when the downlink data stream needs to be sent, determine, by using an AI algorithm such as a neural network, the transmission rate parameter of the data stream based on the communication status parameter obtained by the communications module 702 and the service type of the service to which the data stream belongs and/or the traffic information of the data stream that are/is obtained by the processing module 701, and send the transmission rate parameter of the data stream to the communications module 702, so that the communications module 702 configures the transmission rate of the data stream. For example, the communications module may obtain the communication status parameter in real time, and send the communication status parameter obtained in real time to the AI module, so that the AI module determines, based on the communication status parameter obtained in real time, a real-time configuration used to send the data stream to the receive end, to implement dynamic transmission rate configuration.

In addition, in an embodiment that is not covered by the claimed invention, the communications apparatus may alternatively include a structure shown in FIG. 9. As shown in FIG. 9, a communications apparatus 900 may include a processor 901, a memory 902, and a transceiver 903.

The processor 901 may be configured to: process a communication protocol and communication data, control a second terminal apparatus, execute a software program, process data of the software program, and the like. The memory 902 may be configured to store the program and data, and the processor 901 may perform, based on the program, the method performed by the second terminal apparatus in the embodiments of this application.

The transceiver 903 may include a radio frequency unit and an antenna. The radio frequency unit may be configured to: perform conversion between a baseband signal and a radio frequency signal, and process the radio frequency signal. The antenna may be configured to send and receive a radio frequency signal in a form of an electromagnetic wave. In addition, only the radio frequency unit may be considered as the transceiver 903. In this case, the communications apparatus 900 may include the processor 901, the memory 902, the transceiver 903, and the antenna.

It should be understood that the communications module 702 may have a structure shown in the transceiver 903, that is, the communications module 702 includes the radio frequency unit and the antenna. Alternatively, the communications module 702 may include the foregoing radio frequency unit. The foregoing processing module 701 and/or the AI module 703 may include the processor 901, or include the processor 901 and the memory 902.

When performing the method shown in the embodiments of this application, the transceiver 903 may be configured to perform the steps performed by the communications module 702. The processor 901 invokes the program stored in the memory 902, to perform the foregoing steps performed by the processing module 701 and/or the AI module 703.

Specifically, the processor 901 may determine a service type of a data stream, and the processor 901 indicates the service type of the data stream to the transceiver 903, so that the transceiver 903 configures a transmission rate of the data stream based on the service type of the data stream, and sends the data stream, to meet a data transmission requirement of a service to which the data stream belongs.

In a possible example, when the service type is used to indicate that the service to which the data stream belongs is a first-type service, the transceiver 903 may configure the transmission rate of the data stream as a first transmission rate. The first transmission rate is not greater than a first rate threshold. A transmission latency required by the first-type service is not higher than a latency threshold.

In another possible example, when the service type is used to indicate that the service to which the data stream belongs is an HTTP download service, the transceiver 903 may configure the transmission rate of the data stream as a second transmission rate. The second transmission rate is not less than a second rate threshold.

In addition, the processor 901 may obtain traffic information of the data stream, and the processor 901 sends the traffic information of the data stream to the transceiver 903, so that the transceiver 903 configures the transmission rate of the data stream based on the service type and the traffic information of the data stream.

Specifically, when the service type is used to indicate that the service to which the data stream belongs is a second-type service, and the traffic information is used to indicate that a traffic peak value of the data stream is not lower than n times of average traffic of the data stream, the transceiver 903 may configure the transmission rate of the data stream to be not less than x times of the average traffic of the data stream, where x is greater than 1. A packet loss rate required by the second-type service is not higher than a packet loss rate threshold, and n is greater than 1. For example, x is greater than n.

In this example, the processor 901 may further perform traffic shaping on the data stream.

In addition, the transceiver 903 may obtain a communication status parameter of the access point and a receive end of the data stream, so that the processor 901 or the transceiver 903 configures the transmission rate of the data stream based on the service type of the service to which the data stream belongs, the traffic information of the data stream, and the communication status parameter.

It should be understood that, in this application, the transceiver 903 may alternatively determine a transmission rate parameter of the data stream according to the method provided in this application, and the transceiver 903 sends the data stream based on the parameter.

It should be understood that the communications apparatus may alternatively include a chip. For example, the chip includes the processor 901. In addition, the chip may be further coupled to any one or more components in the memory 902 and/or the transceiver 903, or the chip may further constitute a chip system with the memory 902 and/or the transceiver 903.

Based on a same concept as that of the foregoing method embodiments, an embodiment of this application, not covered by the claimed invention, further provides a computer-readable storage medium. The computer-readable storage medium stores a computer program. When the program is executed by a processor, the computer is enabled to perform the method performed by the access node in any one of the foregoing method embodiments or the possible implementations of the method embodiments.

Based on a same concept as the foregoing method embodiments, this application further provides a computer program product not covered by the claimed invention. When the computer program product is invoked and executed by a computer, the computer may be enabled to implement the method performed by the access node in any one of the foregoing method embodiments or the possible implementations of the method embodiments.

Based on a same concept as that of the foregoing method embodiments, this application further provides a chip or a chip system, that are not covered by the claimed invention. The chip may include a processor. The chip may further include a memory (or a storage module) and/or a transceiver (or a communications module), or the chip is coupled to a memory (or a storage module) and/or a transceiver (or a communications module). The transceiver (or the communications module) may be configured to support the chip in wired and/or wireless communication, and the memory (or the storage module) may be configured to store a program. The processor invokes the program to implement the method performed by the access node in any one of the foregoing method embodiments or the possible implementations of the method embodiments. The chip system may include the chip, or may include the chip and another discrete component, such as a memory (or a storage module) and/or a transceiver (or a communications module).

Based on a same concept as that of the foregoing method embodiments, this application further provides a communications system, that is not covered by the claimed invention. The communications system may include the foregoing access point. The communications system may be configured to implement the method in any one of the foregoing method embodiments and possible implementations of the method embodiments. For example, the communications system has a structure shown in FIG. 1 or FIG. 2.

The embodiments of this application are described with reference to the flowcharts and/or block diagrams of the method, the apparatus, and the computer program product according to the embodiments. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the other programmable data processing device, so that a series of operations and steps are performed on the computer or the another programmable device, to generate computer-implemented processing. Therefore, the instructions executed on the computer or the other programmable device provide steps for implementing a specific function in one or more processes in the flowcharts and/or in one or more blocks in the block diagrams.

## Claims

1. A transmission rate configuration method, comprising:
determining (S101), by an access point, a service type of a service to which a data stream belongs, in downlink data transmission; and
configuring (S102), by the access point, a transmission rate of the data stream based on the service type and traffic information of the data stream,
**characterized in that**:
the service type is used to indicate that the service to which the data stream belongs is of a type of service for which a packet loss rate required is not higher than a packet loss rate threshold; and the traffic information is used to indicate that a traffic peak value of the data stream is not lower than n times of average traffic of the data stream, and n is greater than 1; and
the configuring, by the access point, the transmission rate of the data stream based on the service type and traffic information of the data stream comprises:
configuring, by the access point based on the service type and the traffic information of the data stream, the transmission rate of the data stream to be not less than x times of the average traffic of the data stream, wherein x is greater than 1.

2. The method according to claim 1, wherein the method further comprises:
performing, by the access point, traffic shaping on the data stream.

3. The method according to claim 1 or 2, wherein the method further comprises:
obtaining, by the access point, a communication status parameter of the access point and a receive end of the data stream; and
the configuring, by the access point, a transmission rate of the data stream comprises
configuring, by the access point, the transmission rate of the data stream based on the service type, the traffic information and the communication status parameter; or
configuring, by the access point, the transmission rate of the data stream based on the service type, a traffic model of the data stream, and the communication status parameter.

4. The method according to claim 3, wherein the communication status parameter comprises a part or all of the following parameters:
an air interface bit error rate;
an air interface retransmission rate; or
an air interface rate of the receive end.

5. The method according to any one of claims 1 to 4, wherein the configuring, by the access point, a transmission rate of the data stream further comprises:
determining, by the access point, a transmission rate parameter of the data stream based on the service type, wherein
the transmission rate parameter of the data stream comprises a part or all of the following parameters:
a modulation and coding scheme, MCS, rate configuration;
an aggregation degree of an aggregate media access control service data unit, A-MSDU;
an aggregation degree of an aggregate media access control protocol data unit, A-MPDU; or
a queue allocation rule of Wi-Fi multimedia, WMM.

6. A communications apparatus for an access point, comprising:
a processing module (701), configured to determine a service type of a service to which a data stream belongs, in downlink data transmission; and
a communications module (702), configured to configure a transmission rate of the data stream based on the service type and traffic information of the data stream,
**characterized in that**
the service type is used to indicate that the service to which the data stream belongs is of a type of service for which a packet loss rate required is not higher than a packet loss rate threshold; the traffic information is used to indicate that a traffic peak value of the data stream is not lower than n times of average traffic of the data stream, and n is greater than 1; and
the communications module (702) is specifically configured to:
configure, based on the service type and the traffic information of the data stream, the transmission rate of the data stream to be not less than x times of the average traffic of the data stream, wherein x is greater than 1.

7. The communications apparatus according to claim 6, wherein the processing module (701) is further configured to:
perform traffic shaping on the data stream.

8. The communications apparatus according to claim 6 or 7, wherein the communications module (702) is further configured to:
obtain a communication status parameter of the communications apparatus and a receive end of the data stream; and
the communications module (702) is further configured to:
configure the transmission rate of the data stream based on the service type, the traffic information and the communication status parameter; or
configure the transmission rate of the data stream based on the service type, a traffic model of the data stream, and the communication status parameter.

9. The communications apparatus according to claim 8, wherein the communication status parameter comprises a part or all of the following parameters:
an air interface bit error rate;
an air interface retransmission rate; or
an air interface rate of the receive end.

10. The communications apparatus according to any one of claims 6 to 9, wherein the communications module is further configured to:
determine a transmission rate parameter of the data stream based on the service type, wherein
the transmission rate parameter of the data stream comprises a part or all of the following parameters:
a modulation and coding scheme, MCS, rate configuration;
an aggregation degree of an aggregate media access control service data unit, A-MSDU;
an aggregation degree of an aggregate media access control protocol data unit, A-MPDU; or
a queue allocation rule of Wi-Fi multimedia, WMM.

## Patentansprüche

1. Verfahren zur Übertragungsratenkonfiguration, umfassend:
Bestimmen (S101) eines Diensttyps eines Dienstes, zu dem ein Datenstrom gehört, durch einen Zugriffspunkt bei der Downlink-Datenübertragung; und
Konfigurieren (S102) einer Übertragungsrate des Datenstroms durch den Zugriffspunkt basierend auf dem Diensttyp und den Verkehrsinformationen des Datenstroms,
**dadurch gekennzeichnet, dass**:
der Diensttyp verwendet wird, um anzuzeigen, dass der Dienst, zu dem der Datenstrom gehört, von einem Diensttyp ist, für den eine erforderliche Paketverlustrate nicht höher ist als ein Schwellenwert für die Paketverlustrate; und die Verkehrsinformationen werden verwendet, um anzuzeigen, dass ein Verkehrsspitzenwert des Datenstroms nicht niedriger ist als das n-fache des durchschnittlichen Verkehrs des Datenstroms und n größer als 1 ist; und
das Konfigurieren der Übertragungsrate des Datenstroms durch den Zugriffspunkt basierend auf dem Diensttyp und den Verkehrsinformationen des Datenstroms Folgendes umfasst:
Konfigurieren der Übertragungsrate des Datenstroms durch den Zugriffspunkt basierend auf dem Diensttyp und den Verkehrsinformationen des Datenstroms auf eine Weise, dass sie nicht weniger als das x-fache des durchschnittlichen Verkehrs des Datenstroms beträgt, wobei x größer als 1 ist.

2. Verfahren nach Anspruch 1, wobei das Verfahren ferner Folgendes umfasst:
Durchführen einer Verkehrsgestaltung des Datenstroms durch den Zugriffspunkt.

3. Verfahren nach Anspruch 1 oder 2, wobei das Verfahren ferner Folgendes umfasst:
Erhalten eines Kommunikationsstatusparameters des Zugriffspunkts und eines Empfangsendes des Datenstroms durch den Zugriffspunkt; und
das Konfigurieren einer Übertragungsrate des Datenstroms durch den Zugangspunkt Folgendes umfasst
Konfigurieren der Übertragungsrate des Datenstroms durch den Zugriffspunkt basierend auf dem Diensttyp, den Verkehrsinformationen und dem Kommunikationsstatusparameter; oder
Konfigurieren der Übertragungsrate des Datenstroms durch den Zugriffspunkt basierend auf dem Diensttyp, einem Verkehrsmodell des Datenstroms und dem Kommunikationsstatusparameter.

4. Verfahren nach Anspruch 3, wobei der Kommunikationsstatusparameter einen Teil oder alle der folgenden Parameter umfasst:
eine Bitfehlerrate der Luftschnittstelle;
eine Neuübertragungsrate der Luftschnittstelle; oder
eine Luftschnittstellenrate des Empfangsendes.

5. Verfahren nach einem der Ansprüche 1 bis 4, wobei das Konfigurieren einer Übertragungsrate des Datenstroms durch den Zugriffspunkt ferner Folgendes umfasst:
Bestimmen eines Übertragungsratenparameters des Datenstroms durch den Zugriffspunkt basierend auf dem Diensttyp, wobei der Übertragungsratenparameter des Datenstroms einen Teil oder
alle der folgenden Parameter umfasst:
ein Modulations- und Kodierungsschema, MCS, Ratenkonfiguration; ein Aggregationsgrad einer aggregierten Media Access Control Service-Dateneinheit, A-MSDU;
ein Aggregationsgrad einer aggregierten Media Access Control Protocol Data Unit, A-MPDU; oder
eine Warteschlangenzuweisungsregel für Wi-Fi Multimedia, WMM.

6. Kommunikationsvorrichtung für einen Zugangspunkt, umfassend:
ein Verarbeitungsmodul (701), das dazu konfiguriert ist, bei der Downlink-Datenübertragung einen Diensttyp eines Dienstes zu bestimmen, zu dem ein Datenstrom gehört; und
ein Kommunikationsmodul (702), das dazu konfiguriert ist, eine Übertragungsrate des Datenstroms basierend auf dem Diensttyp und den Verkehrsinformationen des Datenstroms zu konfigurieren,
**dadurch gekennzeichnet, dass**
der Diensttyp verwendet wird, um anzuzeigen, dass der Dienst, zu dem der Datenstrom gehört, von einem Diensttyp ist, für den eine erforderliche Paketverlustrate nicht höher als ein Schwellenwert für die Paketverlustrate ist; die Verkehrsinformationen verwendet werden, um anzuzeigen, dass ein Verkehrsspitzenwert des Datenstroms nicht niedriger ist als das n-fache des durchschnittlichen Verkehrs des Datenstroms und n größer als 1 ist; und
das Kommunikationsmodul (702) spezifisch für Folgendes konfiguriert ist:
Konfigurieren derÜbertragungsrate des Datenstroms basierend auf dem Diensttyp und den Verkehrsinformationen des Datenstroms auf eine Weise, dass sie nicht weniger als das x-fache des durchschnittlichen Verkehrs des Datenstroms beträgt, wobei x größer als 1 ist.

7. Kommunikationsvorrichtung gemäß Anspruch 6, wobei das Verarbeitungsmodul (701) ferner konfiguriert ist zum:
Durchführen einer Verkehrsgestaltung des Datenstroms.

8. Kommunikationsvorrichtung nach Anspruch 6 oder 7, wobei das Kommunikationsmodul (702) ferner für Folgendes konfiguriert ist:
Erhalten eines Kommunikationsstatusparameters der Kommunikationsvorrichtung und eines Empfangsendes des Datenstroms; und
das Kommunikationsmodul (702) ferner für Folgendes konfiguriert ist:
Konfigurieren der Übertragungsrate des Datenstroms basierend auf dem Diensttyp, den Verkehrsinformationen und dem Kommunikationsstatusparameter; oder
Konfigurieren der Übertragungsrate des Datenstroms basierend auf dem Diensttyp, einem Verkehrsmodell des Datenstroms und dem Kommunikationsstatusparameter.

9. Kommunikationsvorrichtung nach Anspruch 8, wobei der Kommunikationsstatusparameter einen Teil oder alle der folgenden Parameter umfasst:
eine Bitfehlerrate der Luftschnittstelle;
eine Neuübertragungsrate der Luftschnittstelle; oder
eine Luftschnittstellenrate des Empfangsendes.

10. Kommunikationsvorrichtung nach einem der Ansprüche 6 bis 9, wobei das Kommunikationsmodul ferner konfiguriert ist zum:
Bestimmen eines Übertragungsratenparameters des Datenstroms durch den Zugriffspunkt basierend auf dem Diensttyp, wobei der Übertragungsratenparameter des Datenstroms einen Teil oder
alle der folgenden Parameter umfasst:
ein Modulations- und Kodierungsschema, MCS, Ratenkonfiguration;
ein Aggregationsgrad einer aggregierten Media Access Control Service-Dateneinheit, A-MSDU;
ein Aggregationsgrad einer aggregierten Media Access Control Protocol Data Unit, A-MPDU; oder
eine Warteschlangenzuweisungsregel für Wi-Fi Multimedia, WMM.

## Revendications

1. Procédé de configuration de débit de transmission, comprenant :
la détermination (5101), par un point d'accès, d'un type de service d'un service auquel appartient un flux de données, lors d'une transmission de données en liaison descendante ; et
la configuration (S102), par le point d'accès, d'un débit de transmission du flux de données sur la base du type de service et des informations de trafic du flux de données,
**caractérisé en ce que** :
le type de service est utilisé pour indiquer que le service auquel appartient le flux de données est d'un type de service pour lequel un taux de perte de paquets requis n'est pas supérieur à un seuil de taux de perte de paquets ; et les informations de trafic sont utilisées pour indiquer qu'une valeur de pointe de trafic du flux de données n'est pas inférieure à n fois le trafic moyen du flux de données, et n est supérieur à 1 ; et
la configuration, par le point d'accès, du débit de transmission du flux de données sur la base du type de service et des informations de trafic du flux de données comprend :
la configuration, par le point d'accès sur la base du type de service et des informations de trafic du flux de données, du débit de transmission du flux de données pour qu'il ne soit pas inférieur à x fois le trafic moyen du flux de données, dans lequel x est supérieur à 1.

2. Procédé selon la revendication 1, dans lequel le procédé comprend en outre :
la réalisation, par le point d'accès, d'une mise en forme du trafic sur le flux de données.

3. Procédé selon la revendication 1 ou 2, dans lequel le procédé comprend en outre :
l'obtention, par le point d'accès, d'un paramètre d'état de communication du point d'accès et d'une extrémité de réception du flux de données ; et
la configuration, par le point d'accès, d'un débit de transmission du flux de données comprend :
la configuration, par le point d'accès, du débit de transmission du flux de données sur la base du type de service, des informations de trafic et du paramètre d'état de communication ; ou
la configuration, par le point d'accès, du débit de transmission du flux de données sur la base du type de service, d'un modèle de trafic du flux de données et du paramètre d'état de communication.

4. Procédé selon la revendication 3, dans lequel le paramètre d'état de communication comprend une partie ou la totalité des paramètres suivants :
un taux d'erreur sur les bits de l'interface hertzienne ;
un débit de retransmission d'interface hertzienne ; ou
un débit d'interface hertzienne de l'extrémité de réception.

5. Procédé selon l'une quelconque des revendications 1 à 4, dans lequel la configuration, par le point d'accès, d'un débit de transmission du flux de données comprend en outre :
la détermination, par le point d'accès, d'un paramètre de débit de transmission du flux de données sur la base du type de service, dans lequel
le paramètre débit de transmission du flux de données comprend une partie ou la totalité des paramètres suivants :
une configuration de débit de schéma de modulation et de codage, MCS ;
un degré d'agrégation d'une unité de données de service de contrôle d'accès au support agrégée, A-MSDU ;
un degré d'agrégation d'une unité de données de protocole de contrôle d'accès au support agrégée, A-MPDU ; ou
une règle d'allocation de file d'attente du multimédia Wi-Fi, WMM.

6. Appareil de communication pour un point d'accès, comprenant :
un module de traitement (701), configuré pour déterminer un type de service d'un service auquel appartient un flux de données, lors d'une transmission de données en liaison descendante ; et
un module de communication (702), configuré pour configurer un taux de transmission du flux de données sur la base du type de service et des informations de trafic du flux de données,
**caractérisé en ce que**
le type de service est utilisé pour indiquer que le service auquel appartient le flux de données est d'un type de service pour lequel un taux de perte de paquets requis n'est pas supérieur à un seuil de taux de perte de paquets ; les informations de trafic sont utilisées pour indiquer qu'une valeur de pointe de trafic du flux de données n'est pas inférieure à n fois le trafic moyen du flux de données, et n est supérieur à 1 ; et
le module de communication (702) est spécifiquement configuré pour :
configurer, sur la base du type de service et des informations de trafic du flux de données, le débit de transmission du flux de données pour qu'il ne soit pas inférieur à x fois le trafic moyen du flux de données, dans lequel x est supérieur à 1.

7. Appareil de communication selon la revendication 6, dans lequel le module de traitement (701) est en outre configuré pour :
effectuer une mise en forme du trafic sur le flux de données.

8. Appareil de communication selon la revendication 6 ou 7, dans lequel le module de communication (702) est en outre configuré pour :
obtenir un paramètre d'état de communication de l'appareil de communication et une extrémité de réception du flux de données ; et
le module de communication (702) est en outre configuré pour :
configurer le débit de transmission du flux de données sur la base du type de service, des informations de trafic et du paramètre d'état de communication ; ou
configurer le débit de transmission du flux de données sur la base du type de service, d'un modèle de trafic du flux de données et du paramètre d'état de communication.

9. Appareil de communication selon la revendication 8, dans lequel le paramètre d'état de communication comprend une partie ou la totalité des paramètres suivants :
un taux d'erreur sur les bits de l'interface hertzienne ;
un débit de retransmission d'interface hertzienne ; ou
un débit d'interface hertzienne de l'extrémité de réception.

10. Appareil de communication selon l'une quelconque des revendications 6 à 9, dans lequel le module de communication est en outre configuré pour :
déterminer un paramètre de débit de transmission du flux de données sur la base du type de service, dans lequel le paramètre de débit de transmission du flux de données comprend une partie ou la totalité des paramètres suivants :
une configuration de débit de schéma de modulation et de codage, MCS ;
un degré d'agrégation d'une unité de données de service de contrôle d'accès au support agrégée, A-MSDU ;
un degré d'agrégation d'une unité de données de protocole de contrôle d'accès au support agrégée, A-MPDU ; ou
une règle d'allocation de file d'attente du multimédia Wi-Fi,
WMM.
